# EUROPEAN PATENT SPECIFICATION

(11) **EP 3 805 336 B1**
(45) Date of publication and mention of the grant of the patent: **22.05.2024**
(21) Application number: 20204335.2
(22) Date of filing: 01.06.2015
(51) Int. Cl.: C09K 5/04

(54) **REFRIGEERATOR COMPRISING A COMPOSITION COMPRISING HFC AND HFO**
KÜHLGERÄT MIT EINER ZUSAMMENSETZUNG MIT HFC UND HFO
RÉFRIGÉRATEUR COMPORTANT UNE COMPOSITION COMPRENANT HFC ET HFO

(30) Priority: 25.09.2014 JP 2014195670
(43) Date of publication of application: 14.04.2021
(62) Divisional of application: 17194054.7
(73) Proprietor: DAIKIN INDUSTRIES, LTD., Osaka-Shi, Osaka 530-0001 (JP)
(72) Inventor: Shibanuma, Takashi, Osaka-Shi, Osaka 5300001 (JP)
(74) Representative: Hoffmann Eitle

(56) References cited:
- WO-A1-2013/192069
- WO-A2-2010/059677
- WO-A2-2012/151238
- US-A1- 2013 186 115

## Description

### Technical Field

The present invention relates to a refrigerator comprising a composition comprising HFC and HFO. HFC denotes hydrofluorocarbon, and HFO denotes hydrofluoroolefin.

### Background Art

Amid worldwide discussion about global warming as a highly serious issue, the development of environmentally preferable refrigeration and air conditioning equipment have become increasingly important. Refrigerants have an impact on warming, and are greatly involved in the performance of refrigeration and air conditioning equipment; therefore, they play an important role in techniques to reduce emissions of carbon dioxide, which affects to warming.

In recent years, there have been various proposals for partially fluorinated propene (HFO) having a double bond in the molecule, which has lower global-warming potential (GWP) than conventionally known CFC (chlorofluorocarbon), HCFC (hydrochlorofluorocarbon), and HFC.

Known examples of HFO include HFO-1234yf (2,3,3,3-tetrafluoropropene) and HFO-1234ze (E- or Z-1,3,3,3-tetrafluoropropene).

These substances are used singly or in the form of a composition (mixture) for various applications. As such compositions, for example, compositions comprising a mixture of HFC and HFO are known, as described in PTL 1 to PTL 4.

PTL 1 discloses a refrigerant composition comprising 36-50 mass% of 1,1,1,2-tetrafluoroethane (HFC-134a) and 50-64 mass% of 2,3,3,3-tetrafluoropropene (HFO-1234yf).

PTL 2 discloses a refrigerant composition comprising 30-50 mass% of difluoromethane (HFC-32) and 70-50 mass% of 2,3,3,3-tetrafluoropropene (HFO-1234yf).

PTL 3 discloses a refrigerant composition comprising difluoromethane (HFC-32), pentafluoroethane (HFC-125), and 2,3,3,3-tetrafluoropropene (HFO-1234yf), wherein the ratio of HFC-32/HFC-125/HFO-1234yf is in a range surrounded by points (0/21/79 mass%), (16.6/25.3/58.1 mass%), and (0/28.4/71.6 mass%) in a ternary diagram of the refrigerant composition, and the composition essentially comprises HFC-32.

PTL 4 discloses a heat transfer composition comprising (a) 20-30 wt.% of HFC-32, (b) 20-30 wt.% of HFC-125, (c) 0-15 wt.% of HFO-1234yf and 10-30 wt.% of HFO-1234ze, and (d) 15-30 wt.% of HFC-134a, with the wt.% being based on the total of the components (a)-(d) in the composition.

PTL 5 describes a heat transfer composition comprising (a) 33-55 wt.% of HFC-32, (b) ≥ 25 wt.% of HFO-1234ze and (c) >t 0 to 30 wt.% of HFC-152a, HFC-134a, and combinations of these, provided that the amount of each of (a)-(c) is selected such that the composition has a burning velocity of < 10, a global warming potential of < 500, and a capacity of within 10% of the cooling capacity of R-22 in an R-22-containing system.

PTL 6 discloses compositions for use in refrigeration, air-conditioning, and heat pump systems wherein the composition comprises HFO-1234yf or HFO-1234ze in combination with at least one other compound. The other compound can be e.g. HFC-32.

PTL 7 relates to a composition consisting of: (A) a refrigerant component consisting essentially of (1 ) at least one refrigerant having an OEL of < 400; and (2) a combination of refrigerants, each having an OEL of > 400, consisting essentially of (i) HFC-134a; (ii) HFC-32; (iii) trans-HFO-1234ze; and optionally (iv) at least one of HFC-134 and HFC-125; provided that HFC-134a is ≤ 26 wt.% of the refrigerant component and the total of HFC- 134a and HFC-134 is ≥ 20 wt.% of the refrigerant component; and optionally (B) a non-refrigerant component.

Although CFC and HCFC have lubrication performance, the lubrication performance of a composition comprising a mixture of HFC and HFO is lower than those of CFC and/or HCFC. In particular, when such a composition is used as a refrigerant composition, the lubrication performance as a whole is generally ensured by using a lubricating oil (refrigerant oil) in combination. In this respect, it is desirable to improve the lubrication performance of the composition comprising a mixture of HFC and HFO before a lubricating oil is used in combination. This improvement has become an issue.

### Citation List

### Patent Literature

PTL 1: WO 2010/002020 (JP-A-2011-525205)
PTL 2: WO 2011/093521 (JP-A-2013-501820)
PTL 3: WO 2010/002014 (JP-A-2011-525204)
PTL 4: WO 2012/151238 (JP-A-2014-514423)
PTL 5: US-A-2013/186115
PTL 6: WO 2010/059677
PTL 7: WO 2013/192069

### Summary of Invention

### Technical Problem

An object of the present invention is to provide a refrigerator comprising a composition which comprises a mixture of HFC and HFO and has improved lubrication performance.

### Solution to Problem

The present inventor conducted extensive research to achieve the above object, and consequently found that the above object can be achieved by a composition comprising HFC and HFO, and further comprising a specific third component. Thus, the present invention has been completed.

That is, the present invention relates to a refrigerator, comprising a composition comprising:
(1) at least one of HFO-1234yf and HFO-1234ze;
(2) HFC-32; and
(3) HCC-40, HCFC-22 and 3,3,3-trifluoropropyne,
wherein the total amount of (1) and (2) is ≥ 95 mass%, based on the total amount of (1)-(3).

Preferred embodiments of the invention are as defined in the appended dependent claims and/or in the following detailed description.

### Advantageous Effects of Invention

The compositions present in the refrigerator of the present invention have improved lubrication performance because they comprise HFC and HFO, and further comprise a specific third component (3,3,3-trifluoropropyne, HCC-40 and HCFC-22). The compositions are useful as refrigerant compositions.

### Brief Description of Drawing

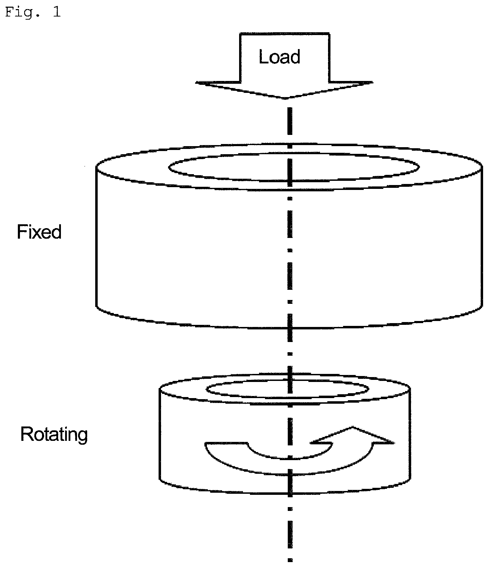

Fig. 1 is a schematic view of a thrust-type friction and abrasion tester (pin-on-disk type) used in an abrasion test in the Examples and Comparative Examples.

### Description of Embodiments

The compositions of the present invention comprise HFC and HFO, and further comprise a specific third component (3,3,3-trifluoropropyne, HCC-40 and HCFC-22). The components constituting the composition of the present invention are defined in Table 1.

**Table 1**

| Code | Structure | Chemical Name |
|---|---|---|
| | | |
| | | |
| HFC-32 | CH₂F₂ | Difluoromethane |
| | | |
| HFO-1234yf | CF₃CF=CH₂ | 2,3,3,3-tetrafluoropropene |
| HFO-1234ze | CF₃CH=CHF | E- or Z-1,3,3,3-tetrafluoropropene |
| | | |
| | | |
| HCC-40 | CH₃Cl | Chloromethane |
| | | |
| HCFC-22 | CHF₂Cl | Chlorodifluoromethane |
| | | |
| - | CF₃C≡CH | 3,3,3-trifluoropropyne |

### Composition

The composition in the present invention comprises HFC and HFO, wherein the composition comprises:
1) HFC-32 as the HFC;
2) at least one of HFO-1234yf and HFO-1234ze as the HFO; and
3) HCC-40, HCFC-22, and 3,3,3-trifluoropropyne as a third component,
wherein the total amount of (1) and (2) is ≥ 95 mass%, based on the total amount of (1)-(3).

Compared with a composition comprising only a combination of HFC and HFO mentioned above, the present composition has improved lubrication performance because it comprises, in addition to the combination of HFC and HFO mentioned above, HCC-40, HCFC-22 and 3,3,3-trifluoropropyne as a third component.

HFO-1234yf and HFO-1234ze may be used singly or mixed at any ratio for use. When HFO-1234yf and HFO-1234ze are mixed, it is preferable that the HFO-1234yf content is 1-99 mass%, and the HFO-1234ze content is 99-1 mass%, when the total amount of the HFOs is 100 mass%.

The third component includes HCC-40,HCFC-22 and 3,3,3-trifluoropropyne. The content of each of these third components is not limited. When a composition comprising HCC-40 is used as a refrigerant composition, HCC-40 may react with aluminum, which is assumed to be used as a piping material of a refrigerator, and thereby produce an explosive substance. Therefore, its content is preferably ≤ 1 mass% when the total amount of the HFC, the HFO, and the third component (HCC-40, HCFC-22 and 3,3,3-trifluoropropyne) is 100 mass%.

The total amount of HFC and HFO is ≥ 95 mass% when the total amount of the HFC, the HFO, and the third component (is 100 mass%. In other words, the content of the third component is < 5 mass%. Although the lubrication performance is maintained even when the content of the third component is ≥ 5 mass%, < 5 mass% is preferred to maintain the properties of the mixture composition of HFC and HFO.

The present composition has improved lubrication performance because it comprise HFC and HFO, and further comprise a specific third component (HCC-40, HCFC-22 and 3,3,3-trifluoropropyne).

The composition is used as refrigerant composition in a refrigerator.

The compositions of the present invention can be particularly suitably used as refrigerant compositions because they have improved lubrication performance. For example, the composition can be suitably used in various refrigerators, such as car air conditioners, vending machine refrigerators, commercial and home air conditioners, gas heat pumps (GHPs), and electrical heat pumps (EHPs). When used as a refrigerant composition, the composition may further contain a refrigerant oil, if necessary. The refrigerant oil content, when used, is preferably set within the range of 10-50 mass% of the refrigerant composition.

### Examples

The present invention is described in detail below with reference to Examples and Comparative Examples.

In the Examples and the Comparative Examples, the lubrication performance of each composition was evaluated from the results of an abrasion test and a baking test. The methods of the abrasion test and the baking test are as described below.

### Abrasion test

Using a thrust-type friction and abrasion tester (pin-on-disk type: see Fig. 1), abrasion loss was measured by the abrasion test using each composition.

### Baking test

Baking load was measured by the baking test using each composition, in which a rod (shaft material) was pressed to a rotating disk (bearing material) while applying a load. The baking load was evaluated as a relative value when the baking load in the Comparative Example was regarded as 100.

### Example 1 (and Comparative Example 1

The compositions of Example 1 and Comparative Example 1 were prepared according to the formulations shown in Table 2, and Table 3 below shows the test results.

**Table 2**

| | Example 1 | Comparative Example 1 |
|---|---|---|
| HFC-32 (69.5 mass%) | 99.5 mass% | 100 mass% |
| HFO-1234yf (30 mass%) | | |
| HCC-40 (0.25 mass%) | 0.5 mass% | - |
| HCFC-22 (0.2 mass%) | | |
| 1,1,1-trifluoropropyne (0.05 mass%) | | |

**Table 3**

| | Example 1 | Comparative Example 1 |
|---|---|---|
| Abrasion test (abrasion loss) | 4.1 µm | 4.4 µm |
| Baking test (load) | 106 | 100 |

The results of Table 3 revealed that the lubrication performance was improved by adding a third component.

## Claims

1. A refrigerator, comprising a composition comprising:
(1) at least one of HFO-1234yf and HFO-1234ze;
(2) HFC-32; and
(3) HCC-40, HCFC-22 and 3,3,3-trifluoropropyne,
wherein the total amount of (1) and (2) is ≥ 95 mass%, based on the total amount of (1)-(3).

2. The refrigerator of claim 1, wherein the composition is a refrigerant composition.

3. The refrigerator of claim 1 or 2, which further comprises a refrigerant oil in an amount of 10-50 mass% in the composition.

4. The refrigerator of any of claims 1-3, which contains ≤ 1 mass% HCC-40, based on the total amount of (1)-(3).

## Patentansprüche

1. Kühlgerät, umfassend eine Zusammensetzung, die umfasst:
(1) mindestens eines von HFO-1234yf und HFO-1234ze;
(2) HFC-32; und
(3) HCC-40, HCFC-22 und 3,3,3-Trifluorpropin,
worin die Gesamtmenge von (1) und (2) basierend auf der Gesamtmenge von (1)-(3) ≥ 95 Massen-% beträgt.

2. Kühlgerät gemäß Anspruch 1, worin die Zusammensetzung eine Kühlmittelzusammensetzung ist.

3. Kühlgerät gemäß Anspruch 1 oder 2, das ferner ein Kühlmittelöl in einer Menge von 10-50 Massen-% in der Zusammensetzung umfasst.

4. Kühlgerät gemäß einem der Ansprüche 1-3, das basierend auf der Gesamtmenge von (1)-(3) ≤ 1 Massen-% HCC-40 enthält.

## Revendications

1. Réfrigérateur, comprenant une composition comprenant :
(1) au moins parmi HFO-1234yf et HFO-1234ze ;
(2) HFC-32 ; et
(3) HCC-40, HCFC-22 et 3,3,3-trifluoropropyne,
dans lequel la quantité totale de (1) et (2) est ≥ 95 % en masse, sur la base de la quantité totale de (1)-(3).

2. Réfrigérateur selon la revendication 1, dans lequel la composition est une composition réfrigérante.

3. Réfrigérateur selon la revendication 1 ou revendication 2, qui comprend en outre une huile réfrigérante en une quantité de 10 à 50 % en masse dans la composition.

4. Réfrigérateur selon l'une quelconque des revendications 1 à 3, qui contient ≤ 1 % en masse de HCC-40, sur la base de la quantité totale de (1)-(3).
